# EUROPEAN PATENT APPLICATION

(11) **EP 4 521 721 A1**
(43) Date of publication of application: **12.03.2025**
(21) Application number: 24195918.8
(22) Date of filing: 22.08.2024
(51) Int. Cl.: H04L 69/163, H04L 43/0829, H04L 43/16

(54) **TRANSPORT LAYER FOR DISTRIBUTED AND FEDERATED LEARNING**

(30) Priority: 05.09.2023 US 202318461276
(71) Applicant: VMware LLC, Palo Alto, CA 94304 (US)
(72) Inventor: Ben-Itzhak, Yaniv, 12550 Herzliya (IL); Vargaftik, Shay, 12550 Herzliya (IL); Zohar, Eyal, 12550 Herzliya (IL)
(74) Representative: Dilg, Haeusler, Schindelmann Patentanwaltsgesellschaft mbH

(57) **Abstract**

Techniques for implementing a new transport layer for distributed and federated learning (and other use cases/applications) are provided. In one set of embodiments, the new transport layer provides partial, rather than complete, reliability in scenarios where some amount of data loss can be tolerated between senders and receivers. This allows the transport layer to implement features that significantly improve the speed and efficiency of network data transfers.

## Description

### Background

Unless otherwise indicated, the subject matter described in this section should not be construed as prior art to the claims of the present application and is not admitted as being prior art by inclusion in this section.

Distributed learning (DL) and federated learning (FL) are machine learning techniques that allow multiple networked computing devices/systems, referred to as clients, to collaboratively train an artificial neural network (ANN) under the direction of a central server, referred to as a parameter server. The main distinction between these two techniques is that the training dataset used by each FL client is private to that client and thus inaccessible to other FL clients. In DL, the clients are typically owned/operated by a single entity (e.g., an enterprise) and thus may have access to some or all of the same training data.

DL/FL training proceeds over a series of rounds, where each round typically includes (1) transmitting, by the parameter server, a vector of the ANN's model weights (referred to as a model weight vector) to a participating subset of the clients; (2) executing, by each participating client, a training pass on the ANN and computing a vector of derivatives of a loss function with respect to the model weights (referred to as a gradient); (3) transmitting, by each participating client, its computed gradient to the parameter server; (4) aggregating, by the parameter server, the gradients received from the clients to produce a global gradient; and (5) using, by the parameter server, the global gradient to update the model weights of the ANN. In many cases, the gradients and the model weight vector will be very large because they are proportional in size to the number of parameters in the ANN. Thus, the time needed to transmit these very large vectors over the network (which is a function of network bandwidth and latency) is often the main bottleneck in DL/FL training.

### Brief Description of the Drawings

FIG. 1 depicts an example DL/FL environment.
FIG. 2 depicts an example ANN.
FIG. 3 depicts an enhanced version of the DL/FL environment of FIG. 1 that implements a novel transport layer according to certain embodiments.
FIG. 4 depicts a flowchart for implementing retransmission reduction using the novel transport layer according to certain embodiments.
FIG. 5 depicts a flowchart for implement prophecy acknowledgements using the novel transport layer according to certain embodiments.
FIG. 6 depicts a flowchart for implement data sent reduction using the novel transport layer according to certain embodiments.

### Detailed Description

In the following description, for purposes of explanation, numerous examples and details are set forth in order to provide an understanding of various embodiments. It will be evident, however, to one skilled in the art that certain embodiments can be practiced without some of these details or can be practiced with modifications or equivalents thereof.

Embodiments of the present disclosure are directed to a novel transport layer, referred to as PROPH, that can be used in distributed and federated learning and other similar use cases/applications. A transport layer, also known as a transport protocol, controls the reliability of a link between two network endpoints (i.e., a sender and a receiver). One of the most commonly used transport layers is Transport Control Protocol (TCP), which is a connection-oriented protocol that provides complete reliability, or in other words ensures that all data transmitted by the sender is received by the receiver.

At a high level, PROPH allows for partial, rather than complete, reliability in scenarios where some amount of data loss can be tolerated by the sender and receiver at the application level. This amount, referred to as a data loss threshold, can be communicated to PROPH by the application layer at the time of initiating a data transfer. By providing partial reliability in accordance with an application-defined data loss threshold, PROPH can support several features (detailed below) that significantly improve the speed and efficiency of network data transfers, particularly in the context of distributed and federated learning.

### 1. Example DL/FL Environment and Solution Overview

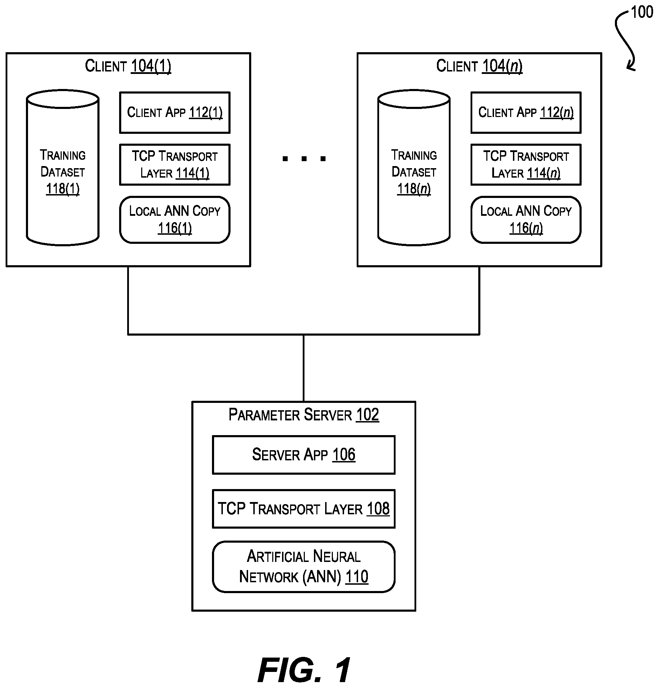

FIG. 1 is a simplified block diagram of an example DL/FL environment 100 in which embodiments of the present disclosure may be implemented. As shown, DL/FL environment 100 comprises a parameter server 102 that is communicatively coupled with a set of clients 104(1)-(*n*). Parameter server 102 and clients 104(1)-(*n*) may be any type of physical or virtual computing device or system known in the art. Parameter server 102 includes a server application 106 that is programmed to perform the parameter server's DL/FL functions, a conventional TCP transport layer 108 for communicating with clients 104 (1)-(*n*), and an ANN 110 to be trained. Each client 104 includes a client application 112 that is programmed to perform the client's DL/FL functions, a conventional TCP transport layer 114 for communicating with parameter server 102, a local copy 116 of ANN 110, and a local training dataset 118.

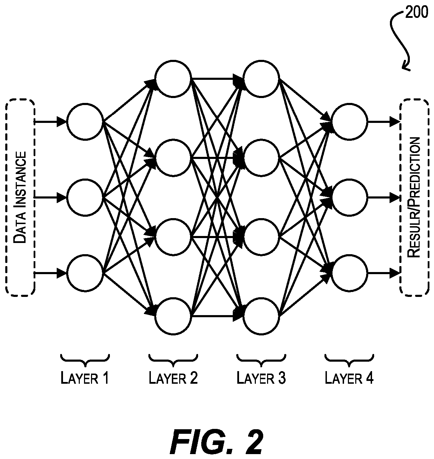

As known in the art, an ANN is a type of machine learning model comprising a collection of nodes that are organized into layers and interconnected via directed edges. By way of example, FIG. 2 depicts an ANN 200 that includes a total of fourteen nodes and four layers 1-4. The edges are associated with parameters (i.e., model weights, not shown) that control how a data instance, which is provided as input to the ANN via the first layer, is processed to generate a result/prediction, which is output by the last layer. These model weights are adjusted via DL/FL training in a round-based manner to optimize the ANN's performance in generating correct results/predictions. For instance, the following is a typical sequence of operations that may be executed by parameter server 102 and clients 104(1)-(*n*) of FIG. 1 using their respective applications 106 and 112 for training ANN 110 during a single DL/FL training round *r:*
1. Server application 106 of parameter server 102 selects *m* out of the *n* clients to participate in round *r.*
2. Server application 106 transmits, via server-side TCP transport layer 108, a vector of the current model weights for ANN 110 to each participating client.
3. Client application 112 of each participating client receives, via client-side TCP transport layer 114, the model weight vector and updates the model weights in local ANN copy 116 with the values in this vector.
4. Client application 112 performs a training pass on local ANN copy 116 that involves (a) providing a batch of labeled data instances in training dataset 118 (denoted as the matrix *X*) as input to local ANN copy 116, resulting in a set of results/predictions *f*(*X*); (b) computing a loss vector for *X* using a loss function *L* that takes *f*(*X*) and the labels of*X* as input; and (c) computing, based on the loss vector, a vector of derivative values of *L* with respect to the model weights, referred to as a gradient. Generally speaking, this gradient indicates how much the output of local ANN copy 116 changes in response to changes to the ANN's model weights, in accordance with the loss vector.
5. Client application 112 transmits, via client-side TCP transport layer 114, the gradient to parameter server 102.
6. Server application 106 receives, via server-side TCP transport layer 108, the gradients from the participating clients and computes a global gradient by aggregating the received gradients in some manner (e.g., averaging, etc.).
7. Server application 106 applies a gradient-based optimization algorithm such as gradient descent to update the model weights of ANN 110 in accordance with the global gradient and current round r ends.

Operations (1)-(7) can subsequently be repeated for additional rounds *r* + 1, *r* + 2, etc. until a termination criterion is reached. This termination criterion may be, e.g., a lower bound on the size of the global gradient, an accuracy threshold for ANN 110, or a number of rounds threshold.

As noted in the Background section, an issue with the DL/FL training process above is that the time needed to transmit the model weight vector and gradients at operations (2) and (5) can often be lengthy due to the size of the vectors. As a result, improving the speed of these data transfers can have significant benefits on the overall speed and efficiency of the training process. For example, consider a cross-device FL scenario in which clients 104(1)-(*n*) are geographically dispersed mobile devices located at varying distances from (and thus having varying network latencies to) parameter server 102. By minimizing the tail latencies of clients 104(1)-(*n*) (i.e., the latencies of the most laggy clients), each training round can be completed more quickly because parameter server 102 will not have to wait as long to receive the gradients of all participating clients in that round. This in turn can lead to faster training completion, improved accuracy of the ANN within a fixed training timeframe, reduced compute and network costs, and decreased power consumption/carbon footprint.

One known approach for mitigating the foregoing issue involves compressing the gradients and/or model weight vector at the application layer (i.e., server and client applications 106 and 112) using a compression technique such as EDEN or SignSGD. With this approach, it is possible to significantly reduce the size of the vectors without compromising the accuracy and reliability of the DL/FL training. However, even with such compression in place, the network throughput between clients 104(1)-(*n*) and parameter server 102 can be degraded by mechanisms used by their respective TCP transport layers for enforcing complete reliability.

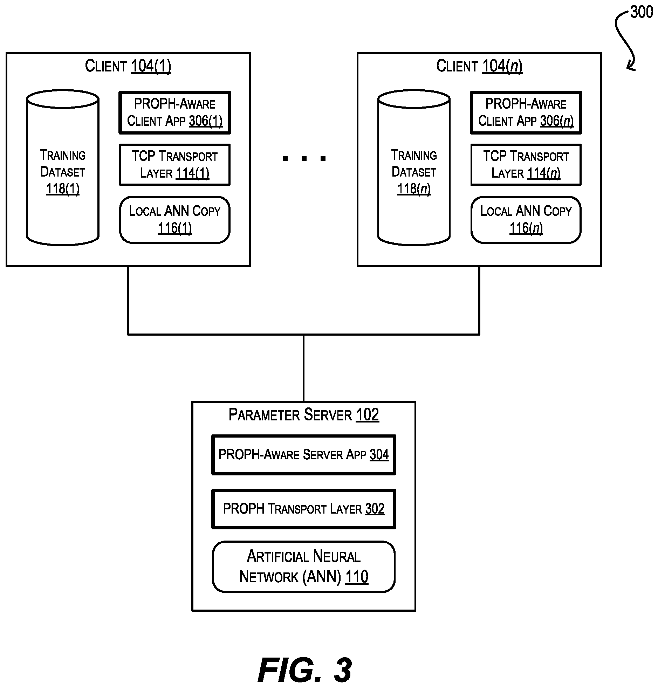

To address this, FIG. 3 depicts an enhanced version 300 of DL/FL environment 100 that includes a new PROPH transport layer 302 at parameter server 102 in lieu of conventional TCP transport layer 108 according to certain embodiments. DL/FL environment 300 also includes new PROPH-aware versions of the server and client applications at parameter server 102 and clients 104(1)-(*n*) respectively, shown via reference numerals 304 and 306.

Generally speaking, PROPH transport layer 302 provides partial reliability for data (e.g., gradient information) that is sent from each client 104 to parameter server 102, in accordance with a data loss threshold defined by the PROPH-aware application layer comprising server and client applications 304 and 306. For example, assume the PROPH-aware application layer determines that it can tolerate losing up to 10% of a given gradient *G* transmitted to parameter server 102, in order to speed up DL/FL training. In this case, the application layer can inform PROPH transport layer 302 of this 10% data loss threshold (e.g., at the time of initiating transfer of gradient *G*), and layer 302 can thereafter manage its receipt of network packets for *G* from client-side TCP transport layer 114 and deliver those packets to PROPH-aware server application 304 in a manner that respects the threshold, or in other words ensures no more than 10% of the delivered packet data is "lost" data.

By supporting partial reliability based on an application-defined data loss threshold, PROPH transport layer 302 can implement a number of novel features that significantly improve the speed and efficiency of DL/FL training. These features, which may be implemented individually or in combination, can include:
- retransmission reduction, which involves intentionally avoiding the retransmission of lost network packets;
- prophecy acknowledgements (ACKs), which involves acknowledging the receipt of certain packets before they are actually received; and
- data sent reduction, which involves stopping the data transfer between PROPH-aware client and server applications 306 and 304 once a sufficient amount of data (e.g., the total amount of data to be transmitted minus the data loss threshold) is received by server application 304.

With the architecture and features described above, several important benefits are achieved. For example, as mentioned, the retransmission reduction, prophecy ACKs, and data sent reduction features allow for significant improvements in the speed and efficiency of DL/FL training. Regarding retransmission reduction, these improvements arise from the ability of PROPH transport layer 302 to inform PROPH-aware server application 304 that a given network packet has been lost, rather than requesting retransmission of that packet from the client side, and thereby keep the network throughput between the client and the parameter server high (and the latency between these entities low). Upon receiving a "data lost" signal, PROPH-aware server application 304 can intelligently replace the lost packet data with other information in a way that minimizes the impact of the data loss. This works particularly well if the PROPH-aware application layer implements gradient compression, because several compression schemes are designed to gracefully handle scenarios where a portion of a compressed vector is lost during transmission. For example, the EDEN compression scheme can replace a certain number of lost gradient coordinates with zeros without substantially increasing approximation bias.

Regarding prophecy ACKs, the speed/efficiency improvements arise from the ability of PROPH transport layer 302 to quickly enlarge the send window size of PROPH-aware client application 306, particularly at the start of the data transfer process, which leads to more efficient usage of the total link bandwidth available between each client and parameter server 102.

And regarding data sent reduction, the speed/efficiency improvements arise from the ability of PROPH transport layer 302 to simply stop the data transfer between client and server applications 306 and 304 early (if possible).

Further, as shown in FIG. 3, the architecture proposed herein only requires use of new PROPH transport layer 302 at the receiver side (i.e., parameter server 102). The sender side (i.e., each client 104) can continue using a conventional TCP transport layer. This is useful because in FL scenarios such cross-device FL, the clients will be diverse in terms of their software and hardware stacks and/or will not be under the control of the entity conducting the FL training. Accordingly, such clients cannot be easily modified to use a new transport layer.

The remainder of this disclosure provides additional details for implementing the retransmission reduction, prophecy ACKs, and data sent reduction features of PROPH transport layer 302 according to certain embodiments. It should be appreciated that FIG. 3 and the foregoing description are illustrative and not intended to limit embodiments of the present disclosure. For example, although this figure and description focus on using PROPH transport layer 302 for improving the speed and efficiency of distributed and federated learning, layer 302 and its associated features may also be leveraged for other use cases where a certain degree of data loss between senders and receivers can be tolerated, such as network measurements and distributed/federated analysis.

Further, PROPH transport layer 302 is not limited to accelerating the transfer of gradient information and may be used to accelerate the transfer of any type of data that can accommodate some loss. For example, in one set of embodiments PROPH transport layer 302 can be leveraged for transferring a dataset between a sender and receiver, where the dataset comprises a plurality of rows and where each row comprises data for one or more features/columns. Such a dataset can be provided as input to train a machine learning model like ANN 110. In these embodiments, it is assumed that some of the rows of the dataset may be lost (and the data for those lost rows may be synthetically created) without significant negative effects.

Yet further, although the foregoing description assumes that PROPH transport layer 302 serves as a replacement for a conventional TCP transport layer at parameter server 102 and that clients 104(1)-(*n*) and parameter server 102 are interconnected via a lossy network (i.e., a network susceptible to packet loss), the features described herein may also be applied to other transport layers and other types of networks. For example, the retransmission reduction feature may be implemented on top of another transport layer and the data transmission reduction feature may be implemented in a network with lossless interconnects/links. One of ordinary skill in the art will recognize other variations, modifications, and alternatives.

### 2. Retransmission Reduction

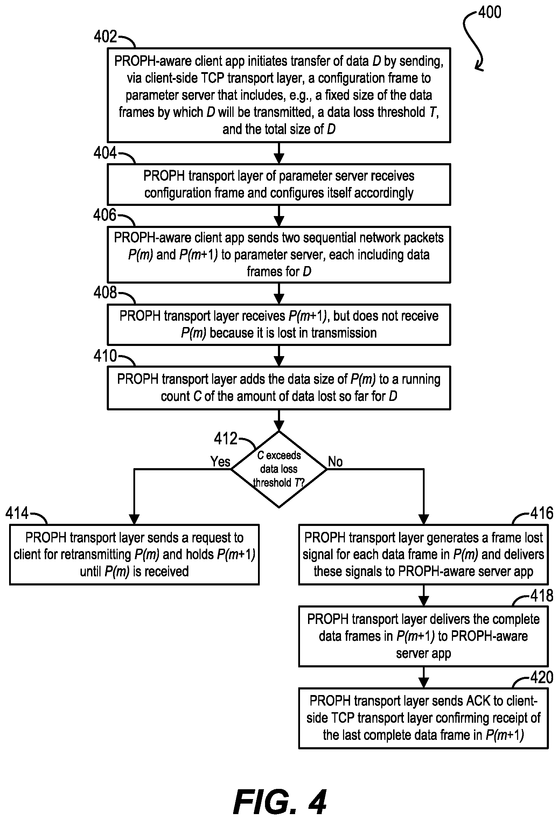

FIG. 4 depicts a flowchart 400 illustrating how PROPH transport layer 302 can reduce packet retransmissions in a scenario where one or more network packets sent by a client 104 to parameter server 102 are lost according to certain embodiments. With conventional TCP, if a packet transmitted by a sender is lost on the wire before reaching the receiver, the TCP transport layer of the receiver will send a request to the sender to retransmit the lost packet and this will repeat until the packet is received. With the retransmission reduction feature shown in FIG. 4, if a network packet transmitted by client 104 is lost before reaching parameter server 102, PROPH transport layer 302 of parameter server 102 will not request retransmission of the packet, provided the total amount of data that has been lost so far for the current data transfer is below a data loss threshold.

Starting with step 402, PROPH-aware client application 306 of client 104 initiates a transfer of some data *D* (such as a gradient) to PROPH-aware server application 304 of parameter server 106 by sending, via client-side TCP transport layer 114, an initial unit of configuration information (referred to as a configuration frame) to server application 304. This configuration frame indicates the intention of PROPH-aware client application 306 to utilize the partial reliability features of PROPH transport layer 302 for transferring data *D* and includes certain parameters for configuring layer 302 in accordance with that intention. These parameters can include, among other things, a fixed size for the discrete data units (i.e., data frames) by which data *D* will be transmitted, a data loss threshold *T* for *D,* and the total size of *D.* For example, in the case where data *D* is a gradient, each fixed-size data frame of *D* can correspond to a coordinate of the gradient vector. As another example, in the case where data *D* is a dataset, each fixed-size data frame of *D* can correspond to one or more rows of that dataset.

At step 404, PROPH transport layer 302 receives the configuration frame and configures itself accordingly. It is assumed that PROPH transport layer 302 receives the configuration frame reliably, such that no data within the configuration frame is lost.

Once PROPH transport layer 302 has successfully received and processed the configuration frame, PROPH-aware client application 306 proceeds with transferring data *D* by sending two sequential network packets *P*(*m*) and *P(m* + 1) to parameter server 102, where each packet includes a set of sequential data frames of *D* (step 406). Each of these data frames has a fixed size per the configuration frame sent at step 402.

At step 408, PROPH transport layer 302 receives packet *P*(*m* + 1)) successfully, but does not receive packet *P(m)* because it is lost during transmission. In response, PROPH transport layer 302 adds the size of the data payload of *P(m)* to a running count C of the amount of data that has been lost so far for data *D* (step 410) and checks whether C exceeds data loss threshold *T* (step 412).

If the answer at step 412 is yes, PROPH transport layer 302 sends a request to client-side TCP transport layer 114 for retransmitting packet *P(m)* and holds packet *P*(*m* + 1)) (or in other words, does not deliver it to PROPH-aware server application 304) until *P(m)* is successfully received (step 414). In some cases, PROPH transport layer 302 may need to send multiple retransmission requests in order to receive packet *P*(*m*)*.*

However, if the answer at step 412 is no (which means the data loss threshold for the current data transfer has not yet been reached), PROPH transport layer 302 generates a "frame lost" signal for each data frame of packet *P(m)* indicating that it has been lost and delivers the frame lost signals with the original packet sequence number of *P(m)* to PROPH-aware server application 304 (step 416). In this way, PROPH transport layer 302 informs PROPH-aware server application 304 that packet *P(m)* is lost and avoids triggering a retransmission of that packet.

In addition, PROPH transport layer 302 delivers the complete data frames in received packet *P(m +* 1) to PROPH-aware server application 304 (step 418). If packet *P*(*m +* 1) includes an incomplete data frame that overlaps with next packet *P(m* + 2), PROPH transport layer 302 can hold that incomplete data frame until it determines the fate of *P(m* + 2).

Finally, at step 420, PROPH transport layer 302 sends an ACK to client-side TCP transport layer 114 confirming receipt of the last complete data frame in packet *P(m* + 1).

Although not shown in FIG. 4, once PROPH-aware server application 304 receives the frame lost signals corresponding to the lost data frames in packet *P*(*m*), the application can create synthetic substitutes for the data in those lost data frames, in a manner that best suits its needs. For example, as mentioned previously, if transferred data *D* is a compressed gradient, PROPH-aware server application 304 can perform data substitution for the lost data frames (i.e., gradient coordinates) using a strategy that minimizes approximation error or bias.

Alternatively, in some embodiments PROPH transport layer 302 may handle data substitution for lost data frames directly, rather than leaving it to the application layer. In other words, for each lost data frame *F,* PROPH transport layer 302 may create a version of *F* with synthetic data (i.e., *F')* and deliver *F'* to PROPH-aware server application 304 instead of the frame lost signal mentioned in FIG. 4. In these embodiments, PROPH-aware server application 304 may or may not be aware that *F'* is synthetic, but in either case can process it as a normal data frame.

### 3. Prophecy ACKs

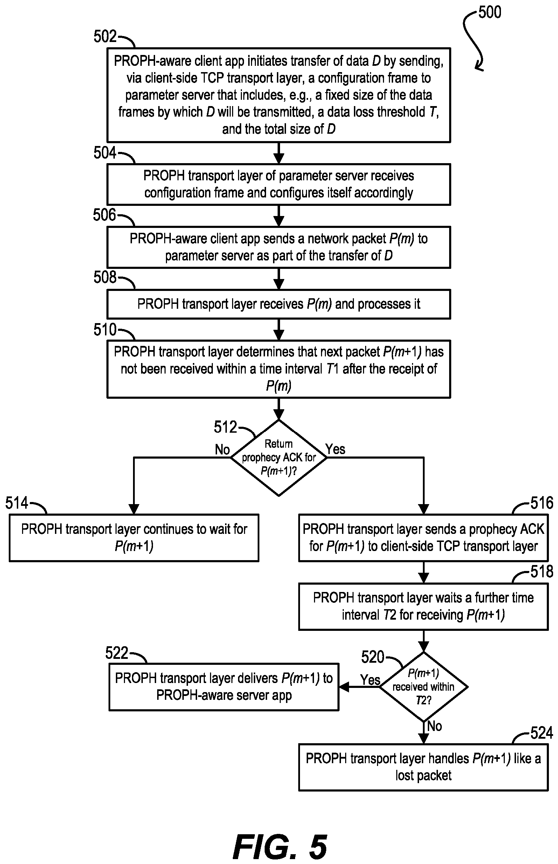

FIG. 5 depicts a flowchart 500 illustrating how PROPH transport layer 302 can implement prophecy ACKs to improve the throughput of a data transfer from a client 104 to parameter server 102 according to certain embodiments. In a conventional TCP data transfer between a sender and receiver, the sender transmits network packets and the receiver returns ACKs for the packets upon actual receipt. Further, the sender starts out with transmitting packets at a relatively slow rate to prevent its send window-which is a memory buffer holding sent but not-yet-acknowledged packets-from potentially becoming too large. This is known as the TCP slow start phenomenon. If the sender sees that it is receiving ACKs at a good rate as the transfer proceeds, it will increase its transmission rate accordingly.

With the prophecy ACKs feature shown in FIG. 5, PROPH transport layer 302 can return ACKs for packets expected from client 104 in a preemptive manner (i.e., before layer 302 actually receives them), based on its knowledge of the amount of data loss that can be tolerated for the data transfer, the total size of the data transfer, and other information. This allows PROPH transport layer 302 to mitigate the TCP slow start phenomenon (by rapidly increasing the send window size of client 104 via accelerated ACKs) and reduce the time needed to reach an optimal data throughput rate. This feature also effectively reduces the memory and power consumption needed for the data transfer at the client side, which is particularly beneficial for resource-constrained clients such as mobile devices.

Starting with step 502, PROPH-aware client application 306 of client 104 initiates a transfer of data *D* to PROPH-aware server application 304 of parameter server 106 by sending, via client-side TCP transport layer 114, a configuration frame to server application 304. As mentioned previously, this configuration frame indicates the intention of PROPH-aware client application 306 to utilize the partial reliability features of PROPH transport layer 302 for transferring data *D* and includes certain parameters such as a data loss threshold *T* for *D* and the total size of *D.* In response, PROPH transport layer 302 receives the configuration frame and configures itself accordingly (step 504).

At step 506, PROPH-aware client application 306 proceeds with transferring data *D* by sending, via client-side TCP transport layer 114, a network packet *P*(*m*) to parameter server 102. In response, PROPH transport layer 302 of parameter server 102 receives packet *P*(*m*) and processes it by, e.g., delivering the data frames in *P(m)* to PROPH-aware server application 304 and returning an ACK for *P*(*m*) to client-side TCP transport layer 114 (step 508).

At step 510, PROPH transport layer 302 determines that the next packet expected from client 104 for the data transfer (i.e., packet *Fern* + 1)) has not been received within a time interval *T1* after the receipt of prior packet *P*(*m*)*.* As a result, PROPH transport layer 302 decides whether it should return a preemptive (i.e., prophecy) ACK for *P(m* + 1) at this point, in order to encourage the client to increase its send window (and thus its packet transmission rate) (step 512). The decision at step 512 can be based on a number of factors, such as whether data loss threshold *T* has been reached and whether the current data throughput for the data transfer is below a desired/optimal throughput rate.

If the answer at step 512 is no, PROPH transport layer 302 continues to wait for packet *P(m* + 1) (step 514). However, if the answer at step 512 is yes, PROPH transport layer 302 returns a prophecy ACK for packet *P(m* + 1) to client-side TCP transport layer 114 (step 516) and waits a further time interval *T*2 for receiving packet *P(m* + 1) (step 518). If packet *P(m* + 1) is received within time interval T2, PROPH transport layer 302 delivers it to PROPH-aware server application 304 per normal operation (steps 520 and 522). However, if packet *P(m* + 1) is not received within time interval *T*2, PROPH transport layer 302 handles the packet under the assumption that it has been lost (step 524). For example, in certain embodiments PROPH transport layer 302 can apply its retransmission reduction feature (in accordance with steps 408-420 of FIG. 4) to determine whether to request retransmission of the packet.

It should be noted that the length of time intervals *T*1 and *T*2 may vary for different network environments and can be configured via a learning process that attempts to make best use of the available bandwidth between clients 104(1)-(*n*) and parameter server 102. This learning process can take into consideration factors such as round-trip time (RTT), the memory capacity of each client, past packet loss rates, and so on.

### 4. Data Sent Reduction

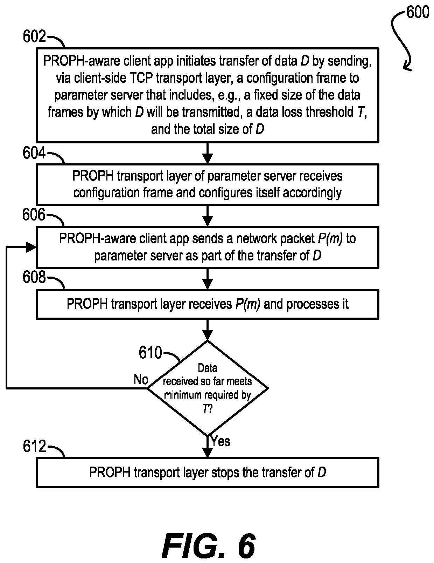

FIG. 6 depicts a flowchart 600 illustrating how PROPH transport layer 302 can implement the data sent reduction feature to reduce the time needed to complete a data transfer from a client 104 to parameter server 102 according to certain embodiments.

At step 602, PROPH-aware client application 306 of client 104 initiates a transfer of data *D* to PROPH-aware server application 304 of parameter server 106 by sending, via client-side TCP transport layer 114, a configuration frame to server application 304. As mentioned previously, this configuration frame indicates the intention of PROPH-aware client application 306 to utilize the partial reliability features of PROPH transport layer 302 for transferring data *D* and includes certain parameters such as a data loss threshold *T* for *D* and the total size of *D.* In response, PROPH transport layer 302 receives the configuration frame and configures itself accordingly (step 604).

At step 606, PROPH-aware client application 306 proceeds with transferring data *D* by sending, via client-side TCP transport layer 114, a network packet *P*(*m*) to parameter server 102. In response, PROPH transport layer 302 of parameter server 102 receives packet *P*(*m*) and processes it by, e.g., delivering the data frames in *P(m)* to PROPH-aware server application 304 and returning an ACK for *P*(*m*) to client-side TCP transport layer 114 (step 608).

At step 610, PROPH transport layer 302 checks whether the amount of data received so far in the transfer of data *D* meets the minimum amount required by data loss threshold *T.* For example, if the total size of data *D* is 10 gigabytes (GB) and data loss threshold *T* is 10% (i.e., 1 GB), PROPH transport layer 302 can check whether the amount of data received so far is equal to or greater than 10-1 = 9 GB.

If the answer at step 610 is no, the flowchart returns to step 606 and the data transfer continues. However, if the answer at step 610 is yes, PROPH transport layer 302 stops the data transfer (e.g., closes the network connection to the client). In the case where this occurs before PROPH-aware server application 304 has received the entirety of data *D*, PROPH transport layer 302 can deliver lost frame signals for the remaining data frames of *D* to server application 304, or alternatively deliver data frames with synthetic data.

Certain embodiments described herein can employ various computer-implemented operations involving data stored in computer systems. For example, these operations can require physical manipulation of physical quantities-usually, though not necessarily, these quantities take the form of electrical or magnetic signals, where they (or representations of them) are capable of being stored, transferred, combined, compared, or otherwise manipulated. Such manipulations are often referred to in terms such as producing, identifying, determining, comparing, etc. Any operations described herein that form part of one or more embodiments can be useful machine operations.

Further, one or more embodiments can relate to a device or an apparatus for performing the foregoing operations. The apparatus can be specially constructed for specific required purposes, or it can be a generic computer system comprising one or more general purpose processors (e.g., Intel or AMD x86 processors) selectively activated or configured by program code stored in the computer system. In particular, various generic computer systems may be used with computer programs written in accordance with the teachings herein, or it may be more convenient to construct a more specialized apparatus to perform the required operations. The various embodiments described herein can be practiced with other computer system configurations including handheld devices, microprocessor systems, microprocessor-based or programmable consumer electronics, minicomputers, mainframe computers, and the like.

Yet further, one or more embodiments can be implemented as one or more computer programs or as one or more computer program modules embodied in one or more non-transitory computer readable storage media. The term non-transitory computer readable storage medium refers to any storage device, based on any existing or subsequently developed technology, that can store data and/or computer programs in a non-transitory state for access by a computer system. Examples of non-transitory computer readable media include a hard drive, network attached storage (NAS), read-only memory, random-access memory, flash-based nonvolatile memory (e.g., a flash memory card or a solid state disk), persistent memory, NVMe device, a CD (Compact Disc) (e.g., CD-ROM, CD-R, CD-RW, etc.), a DVD (Digital Versatile Disc), a magnetic tape, and other optical and non-optical data storage devices. The non-transitory computer readable media can also be distributed over a network coupled computer system so that the computer readable code is stored and executed in a distributed fashion.

Finally, boundaries between various components, operations, and data stores are somewhat arbitrary, and particular operations are illustrated in the context of specific illustrative configurations. Other allocations of functionality are envisioned and may fall within the scope of the invention(s). In general, structures and functionality presented as separate components in exemplary configurations can be implemented as a combined structure or component. Similarly, structures and functionality presented as a single component can be implemented as separate components.

As used in the description herein and throughout the claims that follow, "a," "an," and "the" includes plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of particular embodiments may be implemented. These examples and embodiments should not be deemed to be the only embodiments and are presented to illustrate the flexibility and advantages of particular embodiments as defined by the following claims. Other arrangements, embodiments, implementations, and equivalents can be employed without departing from the scope hereof as defined by the claims.

## Claims

1. A method comprising:
receiving, by a transport layer of a first network endpoint, configuration information from a sender application running on a second network endpoint, the configuration information including a data loss threshold indicating an amount of data loss that may be tolerated for a data transfer from the sender application to a receiver application running on the first network endpoint;
receiving, by the transport layer, one or more network packets from the sender application as part of the data transfer; and
delivering, by the transport layer, data corresponding to the data transfer to the receiver application based on the one or more network packets in a manner that respects the data loss threshold.

2. The method of claim 1, wherein
the sender application transmits two sequential network packets *P* (*m*) and *P* (*m* + 1) as part of the data transfer, and wherein
the transport layer:
receives *P*(*m* + 1) but does not receive *P*(*m*)*;* and
upon receiving *P*(*m* + 1):
adds a data payload size of *P*(*m*) to a running count of data lost so far for the data transfer; and
checks whether the running count exceeds the data loss threshold.

3. The method of claim 2, wherein upon determining that the running count does not exceed the data loss threshold, the transport layer:
generates one or more signals corresponding to *P*(*m*) that indicate *P*(*m*) was lost in transmission; and
delivers the one or more signals to the server application.

4. The method of claim 3, wherein
upon receiving the one or more signals, the server application creates synthetic substitutes for data in *P*(*m*).

5. The method of any one of the claims 1 to 4, wherein
the sender application transmits a network packet *P*(*m*) as part of the data transfer, and wherein the transport layer:
receives *P*(*m*);
determines that next network packet *Fern* + 1) has not been received within a time interval *T1* after receiving *P*(*m*); and
in response to determining that *P(m* + 1) has not been received within T1, returns an acknowledgement (ACK) for *P(m* + 1) to the second network endpoint.

6. The method of claim 5, wherein upon returning the ACK, the transport layer further:
waits for *P(m* + 1) over another time interval *T*2;
in response to determining that *Fern* + 1) has been received within *T*2, the transport layer delivers *P(m* + 1) to the server application; and
in response to determining that *Fern* + 1) has not been received within *T*2, handles *P*(*m* + 1) as a lost packet.

7. The method of any one of the claims 1 to 6, wherein
the sender application transmits a network packet *P*(*m*) as part of the data transfer, and wherein the transport layer:
receives *P*(*m*);
checks whether an amount of data received so far for the data transfer meets a minimum required by the data loss threshold; and
in response to determining that the amount of data received so far does meet the minimum, stops the data transfer.

8. A non-transitory computer readable storage medium having stored thereon program code executable a transport layer of a first network endpoint, the program code causing the transport layer to control and/or carry out a method as set forth in any one of the preceding claims.

9. A network endpoint comprising:
a transport layer;
a receiver application; and
a non-transitory computer readable medium having stored thereon program code that, when executed by the transport layer, causes the transport layer to:
receive configuration information from a sender application running on another network endpoint, the configuration information including a data loss threshold indicating an amount of data loss that may be tolerated for a data transfer from the sender application to the receiver application;
receive one or more network packets from the sender application as part of the data transfer; and
deliver data corresponding to the data transfer to the receiver application based on the one or more network packets in a manner that respects the data loss threshold.

10. The network endpoint of claim 9, wherein
the sender application transmits two sequential network packets *P*(*m*) and *P*(*m* + 1) as part of the data transfer, and wherein
the transport layer:
receives *Fern* + 1) but does not receive *P*(*m*); and
upon receiving *Fern* + 1):
adds a data payload size of *P*(*m*) to a running count of data lost so far for the data transfer; and
checks whether the running count exceeds the data loss threshold.

11. The network endpoint of claim 10, wherein upon determining that the running count does not exceed the data loss threshold, the transport layer:
*g*enerates one or more signals corresponding to *P*(*m*) that indicate *P*(*m*) was lost in transmission; and
delivers the one or more signals to the server application.

12. The network endpoint of claim 11, wherein
upon receiving the one or more signals, the server application creates synthetic substitutes for data in *P*(*m*).

13. The network endpoint of any one of the claims 9 to 12, wherein
the sender application transmits a network packet *P*(*m*) as part of the data transfer, and wherein the transport layer:
receives *P*(*m*);
determines that next network packet *Fern* + 1) has not been received within a time interval *T*1 after receiving *P*(*m*); and
in response to determining that *P(m* + 1) has not been received within *T*1, returns an acknowledgement (ACK) for *P(m* + 1) to the second network endpoint.

14. The network endpoint of claim 13, wherein
upon returning the ACK, the transport layer further:
waits for *P(m* + 1) over another time interval T2;
in response to determining that *Fern* + 1) has been received within *T*2, the transport layer delivers *P(m* + 1) to the server application; and
in response to determining that *Fern* + 1) has not been received within *T*2, handles *Fern* + 1) as a lost packet.

15. The network endpoint of any one of the claims 9 to 14, wherein
the sender application transmits a network packet *P*(*m*) as part of the data transfer, and wherein the transport layer:
receives *P*(*m*);
checks whether an amount of data received so far for the data transfer meets a minimum required by the data loss threshold; and
in response to determining that the amount of data received so far does meet the minimum, stops the data transfer.
